# EUROPÄISCHE PATENTSCHRIFT

(11) **EP 1 388 157 B1**
(45) Veröffentlichungstag und Bekanntmachung des Hinweises auf die Patenterteilung: **19.01.2005**
(21) Anmeldenummer: 02740331.0
(22) Anmeldetag: 10.05.2002
(51) Int. Cl.: H01H 25/00

(54) **MULTIFUNKTIONSSCHALTER**
MULTIFUNCTIONAL SWITCH
INTERRUPTEUR MULTIFONCTIONNEL

(30) Priorität: 18.05.2001 DE 10124246
(43) Veröffentlichungstag der Anmeldung: 11.02.2004
(73) Patentinhaber: Delphi Technologies Inc., Troy, MI 48007 (US)
(72) Erfinder: SOTTONG, Sascha, 55444 Eckenroth (DE)
(74) Vertreter: Becker, Bernd, Dipl.-Ing.
(86) Internationale Anmeldenummer: PCT/DE2002/001687
(87) Internationale Veröffentlichungsnummer: WO 2002/095781

(56) Entgegenhaltungen:
- DE-A- 3 524 439
- DE-A- 19 756 052
- DE-A- 19 946 021

## Beschreibung

Die Erfindung bezieht sich auf einen Multifunktionsschalter, insbesondere getasteter Sitzverstellschalter, mit einem in einem Gehäuse kreuzweise verschiebbar sowie verdrehbar gelagerten Betätigungselement mit zugeordneten Schaltkontakten zur Beaufschlagung von Anschlusskontakten, in das der der Drehbewegung zugehörige Schaltkontakt integriert ist.

Aus der Praxis ist ein elektrischer Tastschalter mit einem in einem Gehäuse kreuzweise verschiebbar sowie verdrehbar gelagerten Betätigungselement bekannt. Das Betätigungselement wirkt mit drei Schiebeschaltgliedern zusammen, die jeweils zwei federbelastete Kontaktrollen zur Beaufschlagung von Kontaktbahnen aufweisen, wobei die Kontaktbahnen als Stanzgitter ausgebildet sind. Das Stanzgitter ist in einen Sockel eingespritzt und weist Anschlusskontakte auf. Die im Wesentlichen rechteckförmigen Schiebeschaltglieder sind mit ihren Längsseiten parallel zueinander im Gehäuse ausgerichtet und weisen Ansätze auf, die in das Betätigungselement eingreifen. Hierbei ist das mittlere Schiebeschaltglied auf zwei gehäuseseitigen Stegen in einer ersten Verschieberichtung hin und her verschiebbar geführt. Bei einer Drehbewegung des Betätigungselementes wird das mittlere Schiebeschaltglied nicht beaufschlagt. Die beiden äußeren Schiebeschaltglieder sind ebenfalls durch gehäuseseitige Stege geführt, die senkrecht zu den Stegen für das mittlere Schiebeschaltglied ausgerichtet und in einer zweiten, senkrecht zur ersten Verschieberichtung orientierten Verschieberichtung des Betätigungselementes verschiebbar sind. Beim Verdrehen des Betätigungselementes werden die beiden äußeren Schiebeschaltglieder gegenläufig zueinander verschoben. Um das Betätigungselement sowie die Schiebeschaltglieder in einer Ausgangsstellung zu halten, sind die beiden äußeren Schiebeschaltglieder gegenüber dem Gehäuse federbelastet. Aufgrund der Anordnung der Schiebeschaltglieder ist eine gleichzeitige Beaufschlagung von Kontaktbahnen durch Verdrehen und Verschieben des Betätigungselementes nicht möglich.

Im Weiteren offenbart die DE 196 10 344 A1 eine Multifunktions-Bedieneinrichtung für ein Kraftfahrzeug zur Auswahl von Menüs und/oder Funktionen mit einem axial und drehbar betätigbaren Bedienelement, wobei eine Aktivierung einer Enter-Funktion durch eine Axialbewegung des Bedienelementes erfolgt. Das Bedienelement ist innerhalb mindestens einer die Achse des Bedienelementes aufweisenden Ebene querverschiebbar angeordnet und wirkt mit Kontaktelementen zusammen. Den Kontaktstellungen des Bedienelementes sind bei einer Querbewegung innerhalb der Ebene Menüs und/oder Funktionen zugeordnet.

Darüber hinaus ist aus der DE 40 33 129 A1 eine Schaltvorrichtung mit einem Betätigungsorgan bekannt, die eine feststehende und eine bewegliche Kontaktordnung umfasst, wobei Kontakte der beweglichen Kontaktordnung durch ein Verschieben bzw. ein Verdrehen des Betätigungsorgans verlagert werden und Kontakte der feststehenden Kontaktordnung beaufschlagen. Die feststehende und die bewegliche Kontaktordnung sind jeweils in einer Ebene angeordnet. Die in Dreiergruppen zusammengefassten Kontakte der beweglichen Kontaktordnung sind mit dem Betätigungsorgan mechanisch gekoppelt.

Des Weiteren offenbaren die DE 35 24 439 A1 und die DE 197 56 052 A1 jeweils einen Multifunktionsschalter zum Einstellen von Spiegeln eines Kraftfahrzeuges, der ein kreuzgelenkig verschwenkbares sowie drehbar gelagertes Betätigungselement aufweist.

Es ist Aufgabe der Erfindung, einen Multifunktionsschalter der eingangs genannten Art zu schaffen, bei dem eine gleichzeitige Beaufschlagung von Anschlusskontakten durch Verdrehen und Verschieben des Betätigungselementes bei einem kompakten Aufbau möglich ist.

Erfindungsgemäß wird die Aufgabe dadurch gelöst, dass dem Betätigungselement für jede seiner Verschieberichtungen ein gehäuseseitig gelagerter, mit Betätigern zusammenwirkender Umlenkhebel zur Beaufschlagung zugehöriger Schaltkontakte zugeordnet ist, wobei das Betätigungselement über einen axialen Führungsansatz mit den Umlenkhebeln zusammenwirkt.

Da der bei der Drehbewegung des Betätigungselementes zugeordnete Anschlusskontakte beaufschlagende Schaltkontakt von den den Verschieberichtungen zugeordneten Schaltkontakten funktional getrennt angeordnet ist, ist eine gleichzeitige Beaufschlagung der Anschlusskontakte durch die Schaltkontakte sowohl beim Verdrehen als auch am beim Verschieben des Betätigungselementes sichergestellt. Darüber hinaus weist der als Multifunktionsschalter ausgebildete elektrische Tastschalter einen relativ einfachen sowie robust ausgeführten Aufbau auf.

Bevorzugt ist der in das Betätigungselement integrierte Schaltkontakt als Kontaktrolle ausgebildet, die federbelastet in dem Betätigungselement auf der dem Gehäuse zugewandten Seite gelagert ist und Kontaktbahnen einer die Anschlusskontakte aufweisenden drehfesten Leiterplatte beaufschlagt. Die direkte Zuordnung der Kontaktrolle zu dem Betätigungselement gewährleistet die Beaufschlagung der Anschlusskontakte beim Verdrehen des Betätigungselementes unabhängig von der Lage, in die das Betätigungselement verschoben ist.

Um eine Beaufschlagung der Anschlusskontakte durch das Verdrehen des Betätigungselementes in die jeweiligen Schaltpositionen störungsfrei zu ermöglichen, weist die Leiterplatte Vertiefungen auf, in denen Kontaktansätze der Kontaktrolle zur Kontaktierung der Anschlusskontakte in einer der Schaltpositionen einliegen.

Nach einer vorteilhaften Ausgestaltung der Erfindung durchragt die Kontaktrolle einen Zwischenring, der mindestens eine federbelastete Rasthülse trägt, die mit einer stirnseitigen in Richtung des Gehäuses weisenden Rastkurve des Betätigungselementes zusammenwirkt. Die mindestens eine federbelastete Rasthülse bewirkt durch ihr Zusammenwirken mit der Rastkurve, dass das Betätigungselement nach einer Verdrehung in seine Ausgangslage zurückkehrt. Im Weiteren ist hierdurch ein taktil erfassbarer Widerstand gegen das Verdrehen des Betätigungselementes vorhanden.

Damit das Betätigungselement mitsamt den für die Schaltvorgänge beim Verdrehen erforderlichen Bauteilen einen kompakten Aufbau aufweist, ist vorteilhafterweise die Leiterplatte in dem Zwischenring von einer Trägerplatte gehalten, die mit dem Betätigungselement zusammenwirkende Klipsarme aufweist. Das Betätigungselement ist durch die Klipsarme der Trägerplatte drehbar gelagert.

Um die Trägerplatte und die Leiterplatte sowie den mit der Trägerplatte gekoppelten Zwischenring drehfest dem Gehäuse zuzuordnen, weist bevorzugt die Trägerplatte sich durch eine zugeordnete Gehäusewand erstreckende Ansätze sowie eine Zentrierhülse auf, die in korrespondierende Ausnehmungen einer drehfest gelagerten Gegenplatte eingreifen.

Nach einer vorteilhaften Weiterbildung des Erfindungsgedankens umfasst die Gegenplatte den in Richtung eines Sockels weisenden zylindrischen Führungsansatz, der verschiebbar in ein Langloch einer Halteplatte eingreift. Somit ist die Führung des Betätigungselementes in einer ersten seiner beiden kreuzweise zueinander gerichteten Verschieberichtungen durch das Eingreifen des Führungsansatzes in das Langloch sichergestellt.

Um auch die zweite der Verschieberichtungen des Betätigungselementes mit relativ einfachen Mitteln zu realisieren, übergreift die Halteplatte die Gegenplatte und ist in einer senkrecht zum Langloch orientierten Richtung verschiebbar gehäuseseitig gelagert.

Nach einer weiteren vorteilhaften Ausgestaltung der Erfindung sind die Umlenkhebel winkelförmig ausgebildet und schwenkbar in einem gehäuseseitig befestigten Träger gelagert, wobei der eine Schenkel jedes Umlenkhebels an dem Führungsansatz der Gegenplatte anliegt und der andere Schenkel auf dem zugeordneten Betätiger aufliegt. Die Umlenkhebel formen die Schiebebewegung des Betätigungselementes in eine senkrecht dazu ausgerichtete Beaufschlagungsbewegung für die Schaltkontakte um.

Um die Umlenkhebel positionsgenau zu fixieren, weisen zweckmäßigerweise die Umlenkhebel an ihren von den Schenkeln gebildeten Eckpunkten gegenüberliegende Lageransätze auf, die zugeordnete Lagerzapfen des Trägers übergreifen.

Damit die Lageransätze der Umlenkhebel bzw. die Lagerzapfen des Trägers keinen großen Querkräften ausgesetzt sind, liegen vorteilhafterweise die dem Führungsansatz der Gegenplatte zugeordneten Schenkel der Umlenkhebel in Ausnehmungen des Trägers ein.

Zur horizontalen Fixierung der Betätiger liegen bevorzugt die den Betätigern zugeordneten Schenkel der Umlenkhebel in Aussparungen derselben ein.

Eine weitere Lagefixierung der Betätiger erfolgt zweckmäßigerweise dadurch, dass die Betätiger zwischen vorgespannten Domen einer Schaltmatte mit den Schaltkontakten und den zugeordneten Schenkeln der Umlenkhebel gehalten sind. Zur Halterung der Betätiger sind somit keine zusätzlichen Befestigungselemente erforderlich.

Vorteilhafterweise fixiert der Sockel eine Kontaktplatte gegenüber der Schaltmatte und presst die Dome mit den aufliegenden Betätigern unter Vorspannung gegen die entsprechenden Schenkel der Umlenkhebel, wobei die in den Domen aufgenommenen Schaltkontakte beim Verschwenken der Umlenkhebel auf Anschlusskontakten der Kontaktplatte zur Auflage kommen.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im Folgenden anhand eines Ausführungsbeispieles unter Bezugnahme auf die zugehörigen Zeichnungen näher erläutert. Es zeigen:

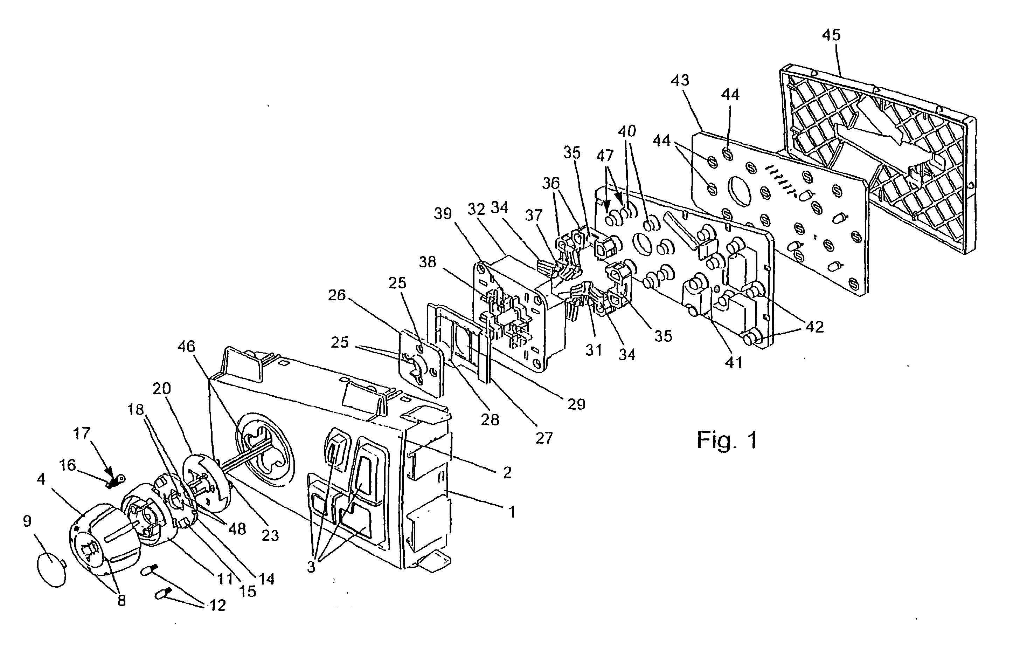

- Fig. 1: eine Explosionsdarstellung eines erfindungsgemäßen Multifunktionsschalters,

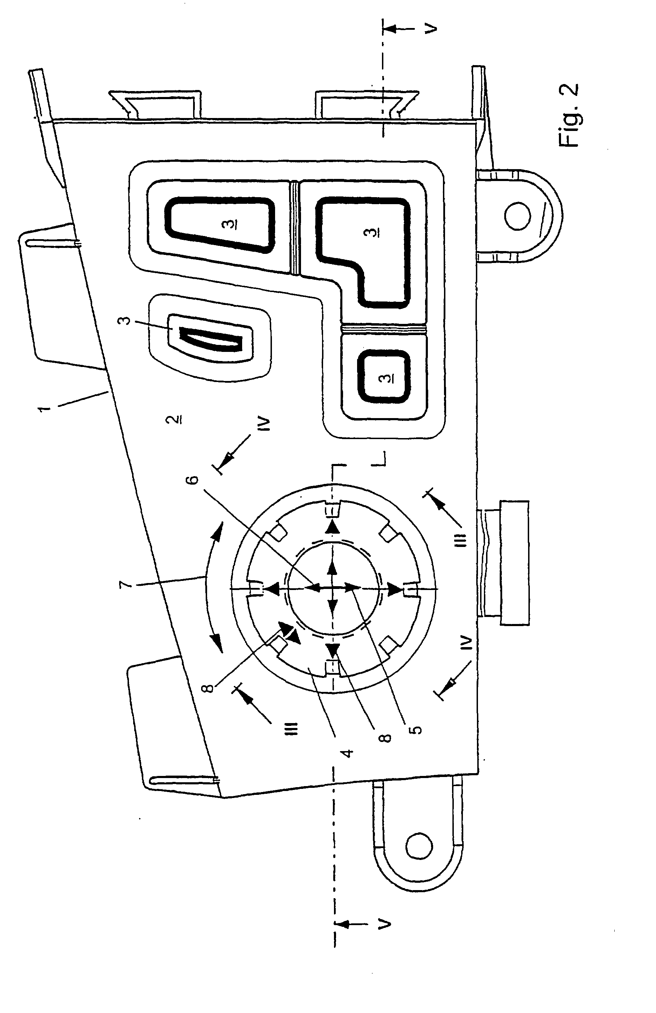

- Fig.2: eine Draufsicht auf den Multifunktionsschalter nach Fig. 1,

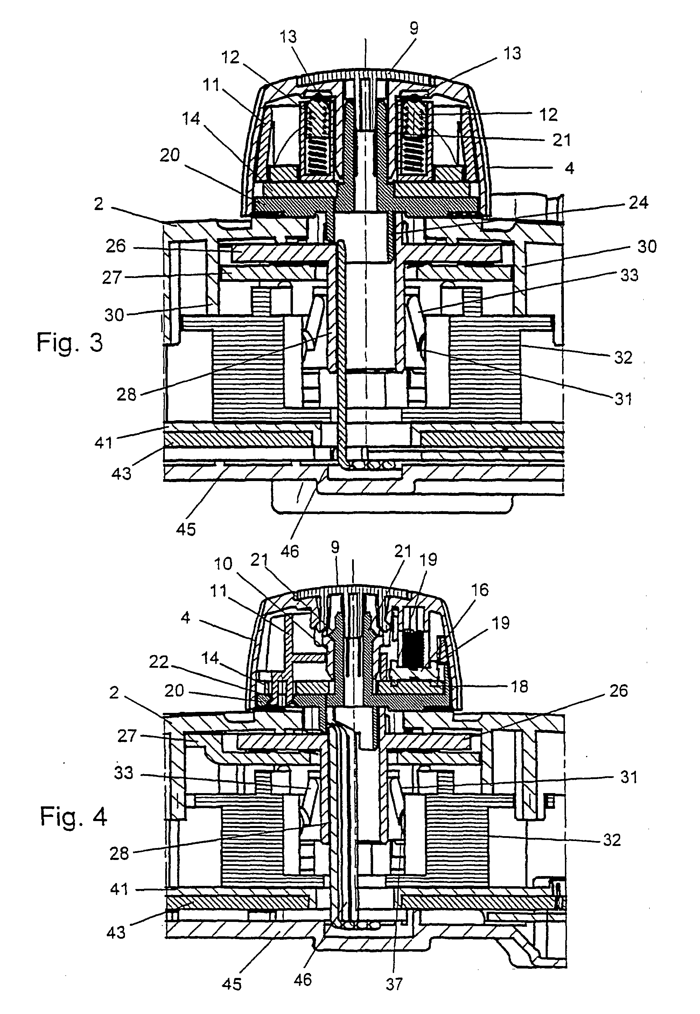

- Fig.3: eine Schnittdarstellung gemäß Linie III-III nach Fig. 2,
- Fig.4: eine Schnittdarstellung gemäß Linie IV-IV nach Fig. 2 und

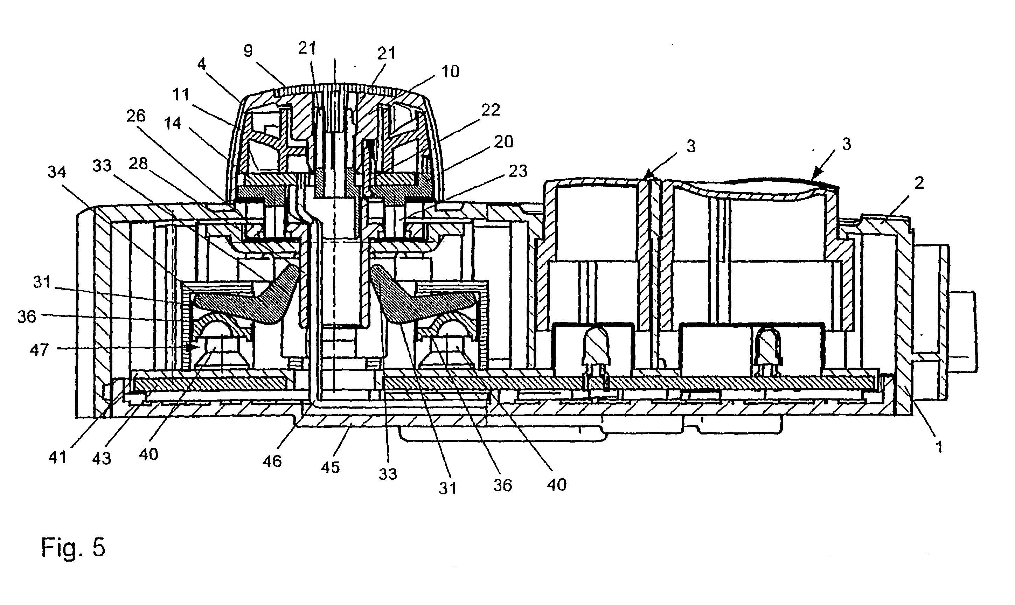

- Fig.5: eine Schnittdarstellung gemäß Linie V-V nach Fig. 2.

Der als Tastschalter ausgebildete Multifunktionsschalter umfasst ein Gehäuse 1, in dessen obere Gehäusewand 2 neben Drucktastenschaltern 3 ein Betätigungselement 4 eingesetzt ist, das gemäß den Doppelpfeilen 5, 6 kreuzweise verschiebbar und entsprechend Doppelpfeil 7 verdrehbar ist. Zur visuellen veranschaulichung der Beaufschlagungsrichtungen ist das Betätigungselement 4 stirnseitig mit hinterleuchtbaren Symbolen 8 versehen. Im Weiteren ist in die freie Stirnseite des Betätigungselementes 4 ein Deckel 9 eingeklipst.

Das Betätigungselement 4 weist auf der dem Deckel 9 gegenüberliegenden Seite eine mittig angeordnete Führungshülse 10 auf, die einen Zwischenring 11 fixiert. Der Zwischenring 11 trägt zwei zueinander beabstandete federbelastete Rasthülsen 12, die mit einer bereichsweise um die Führungshülse 10 verlaufenden Rastkurve 13 des Betätigungselementes 4 zusammenwirken. Ferner ist der Zwischenring 11 bereichsweise als Reflektor ausgebildet, dem zwei auf einer Leiterplatte 14 befestigte Leuchtdioden 15 zur Hinterleuchtung der Symbole 8 des Betätigungselementes 4 zugeordnet sind.

In dem Betätigungselement 4 ist für seine getastete Drehbewegung gemäß Doppelpfeil 7 ein als Kontaktrolle 16 ausgebildeter Schaltkontakt 17 angeordnet. Die Kontaktrolle 16 ist auf der der Gehäusewand 2 zugewandten Seite federbelastet in dem Betätigungselement 4 gelagert und beaufschlagt Anschlusskontakte 48 der Leiterplatte 14. Um ein sicheres Kontaktieren in den entsprechenden Schaltpositionen zu gewährleisten, sind in die Leiterplatte 14 Vertiefungen 18 eingelassen, in denen Kontaktansätze 19 der Kontaktrolle 16 zur Beaufschlagung der Anschlusskontakte 48 in einer der Schaltpositionen einliegen. Die Leiterplatte 14 ist durch eine Trägerplatte 20 in dem Zwischenring 11 gehalten.

Die Trägerplatte 20 weist Klipsarme 21 zur gleichzeitigen Befestigung und verdrehbaren Lagerung des Betätigungselementes 4 auf, die in die Führungshülse 10 des Betätigungselementes 4 eingreifen. Der Zwischenring 11 ist mit Klipsarmen 22 versehen, die zur Fixierung der Leitplatte 14 sowie der Trägerplatte 20 in dieselbe eingreifen. Zur drehfesten Halterung des Zwischenrings 11 und der Leiterplatte 14 weist die Trägerplatte 20 sich durch die Gehäusewand 2 erstreckende Ansätze 23 sowie eine Zentrierhülse 24 auf, die in korrespondierende Ausnehmungen 25 einer Gegenplatte 26 eingreifen, die auf der dem Betätigungselement 4 gegenüberliegenden Seite der Gehäusewand 2 in einer Halteplatte 27 verschiebbar drehfest gelagert ist. Zur verschiebbaren Anordnung der Gegenplatte 26 in Richtung des Doppelpfeils 6 umfasst die Gegenplatte 26 einen zylindrischen Führungsansatz 28, der in einem Langloch 29 der Halteplatte 27 geführt ist. Die die Gegenplatte 26 übergreifende Halteplatte 27 ist in Richtung des Doppelpfeils 5 verschiebbar zwischen gehäuseseitigen Stegen 30 geführt.

An dem zylindrischen Führungsansatz 28 der Gegenplatte 26 stützen sich vier winkelförmige Umlenkhebel 31 ab, die kreuzweise zueinander in einem gehäuseseitig befestigten Träger 32 schwenkbar gelagert sind. Jeder der Verschieberichtungen des Betätigungselementes 4 gemäß den Doppelpfeilen 5, 6 ist ein Umlenkhebel 31 zugeordnet. Die Umlenkhebel 31 liegen mit jeweils einem Schenkel 33 an dem Führungsansatz 28 der Gegenplatte 26 an und mit einem anderen Schenkel 34 in einer Aussparung 35 eines Betätigers 36 für zugeordnete Schaltkontakte 37 ein. An dem von den beiden Schenkeln 33, 34 gebildeten Eckpunkt jedes Umlenkhebels 31 sind gegenüberliegende Lageransätze 37 angeformt, die zugeordnete Lagerzapfen 38 des Trägers 32 übergreifen. Im Weiteren liegen die dem zylindrischen Führungsansatz 28 der Gegenplatte 26 zugeordneten Schenkel 33 der Umlenkhebel 31 in Ausnehmungen 39 des Trägers 32 ein.

Den Betätigern 36 zugeordnete Schaltkontakte 47 sind in Domen 40 einer Schaltmatte 41 angeordnet, die in weiteren Domen 42 Schaltkontakte für die Drucktastenschalter 3 aufnimmt. Die Schaltmatte 41 liegt auf einer Kontaktplatte 43 mit den Schaltkontakten 47 zugeordneten Anschlusskontakten 44 auf, die wiederum von einem Sockel 45 gehalten wird. Zur horizontalen Fixierung der Betätiger 36 sind die Dome 40 gegen die Betätiger 36 vorgespannt und halten diese an den zugeordneten Schenkeln 34 der Umlenkhebel 31.

Beim Verschieben des Betätigungselementes 4 in einer der Richtungen der Doppelpfeile 5, 6 wird über den Führungsansatz 28 der Gegenplatte 26 der entsprechende Umlenkhebel 31 verschwenkt und der zugeordnete Betätiger 36 beaufschlagt zwei Dome 40 der Schaltmatte 41 bis die entsprechenden Schaltkontakte 47 die Anschlusskontakte 44 der Kontaktplatte 43 berühren. Gleichzeitig ist es möglich, das Betätigungselement 4 gemäß Doppelpfeil 7 in die eine oder andere Richtung zu verdrehen, wobei die dem Betätigungselement 4 zugeordnete Kontaktrolle 16 die Anschlusskontakte 48 der Leiterplatte 14 kontaktiert, die über Leitungen 46 mit Steckkontakten für das Bordnetz verbunden ist. Die Rückstellbewegung des Betätigungselementes 4 aus einer verschobenen Lage erfolgt nach dem Loslassen desselben über die selbsttätige Rückstellung der Dome 40 der Schaltmatte 41, die über den zugeordneten Umlenkhebel 31 auf den Führungsansatz 28 der Gegenplatte 26 wirken und das Betätigungselement 4 in die Ausgangslage verschieben. Die Rückstellung des Betätigungselementes 4 aus einer verdrehten Stellung wird durch das Zusammenwirken der federbelasteten Rasthülsen 12 mit der Rastkurve 13 des Betätigungselementes 4 bewerkstelligt.

### Bezugszeichenliste

1. Gehäuse
2. Gehäusewand
3. Drucktastenschalter
4. Betätigungselement
5. Doppelpfeil
6. Doppelpfeil
7. Doppelpfeil
8. Symbol
9. Deckel
10. Führungshülse
11. Zwischenring
12. Rasthülse
13. Rastkurve
14. Leiterplatte
15. Leuchtdiode
16. Kontaktrolle
17. Schaltkontakt
18. Vertiefung
19. Kontaktansatz
20. Trägerplatte
21. Klipsarm
22. Klipsarm
23. Ansatz
24. Zentrierhülse
25. Ausnehmung
26. Gegenplatte
27. Halteplatte
28. Führungsansatz
29. Langloch
30. Steg
31. Umlenkhebel
32. Träger
33. Schenkel
34. Schenkel
35. Aussparung
36. Betätiger
37. Lageransatz
38. Lagerzapfen
39. Ausnehmung
40. Dom
41. Schaltmatte
42. Dom
43. Kontaktplatte
44. Anschlusskontakt
45. Sockel
46. Leitung
47. Schaltkontakt
48. Anschlusskontakt

## Patentansprüche

1. Multifunktionsschalter, insbesondere getasteter Sitzverstellschalter, mit einem in einem Gehäuse (1) kreuzweise verschiebbar sowie verdrehbar gelagerten Betätigungselement (4) mit zugeordneten Schaltkontakten (17, 47) zur Beaufschlagung von Anschlusskontakten (44, 48), in das der der Drehbewegung zugehörige Schaltkontakt (17) integriert ist, **dadurch gekennzeichnet, dass** dem Betätigungselement (4) für jede seiner Verschieberichtungen ein gehäuseseitig gelagerter, mit Betätigern (36) zusammenwirkender Umlenkhebel (31) zur Beaufschlagung zugehöriger Schaltkontakte (47) zugeordnet ist, wobei das Betätigungselement (4) über einen axialen Führungsansatz (28) mit den Umlenkhebeln (31) zusammenwirkt.

2. Multifunktionsschalter nach Anspruch 1, **dadurch gekennzeichnet, dass** der in das Betätigungselement (4) integrierte Schaltkontakt (17) als Kontaktrolle (16) ausgebildet ist, die federbelastet in dem Betätigungselement (4) auf der dem Gehäuse (1) zugewandten Seite gelagert ist und Kontaktbahnen einer die Anschlusskontakte aufweisenden drehfesten Leiterplatte (14) beaufschlagt.

3. Multifunktionsschalter nach Anspruch 2, **dadurch gekennzeichnet, dass** die Leiterplatte (14) Vertiefungen (18) aufweist, in denen Kontaktansätze (19) der Kontaktrolle (16) zur Kontaktierung der Kontaktbahnen in einer der Schaltpositionen einliegen.

4. Multifunktionsschalter nach Anspruch 1 oder 2, **dadurch gekennzeichnet, dass** die Kontaktrolle (16) einen Zwischenring (11) durchragt, der mindestens eine federbelastete Rasthülse (12) trägt, die mit einer stirnseitigen in Richtung des Gehäuses (1) weisenden Rastkurve (13) des Betätigungselementes (4) zusammenwirkt.

5. Multifunktionsschalter nach einem der Ansprüche 2 bis 4, **dadurch gekennzeichnet, dass** die Leiterplatte (14) in dem Zwischenring (11) von einer Trägerplatte (20) gehalten ist, die mit dem Betätigungselement (4) zusammenwirkende Klipsarme (21) aufweist.

6. Multifunktionsschalter nach Anspruch 5, **dadurch gekennzeichnet, dass** die Trägerplatte (20) sich durch eine zugeordnete Gehäusewand (2) erstreckende Ansätze (23) sowie eine Zentrierhülse (24) aufweist, die in korrespondierende Ausnehmungen (25) einer drehfest gelagerten Gegenplatte (26) eingreifen.

7. Multifunktionsschalter nach Anspruch 6, **dadurch gekennzeichnet, dass** die Gegenplatte (26) den in Richtung eines Sockels (45) weisenden zylindrischen Führungsansatz (28) umfasst, der verschiebbar in ein Langloch (29) einer Halteplatte (27) eingreift.

8. Multifunktionsschalter nach Anspruch 7, **dadurch gekennzeichnet, dass** die Halteplatte (27) die Gegenplatte (26) übergreift und in einer senkrecht zum Langloch (29) orientierten Richtung verschiebbar gehäuseseitig gelagert ist.

9. Multifunktionsschalter nach einem der Ansprüche 1 bis 8, **dadurch gekennzeichnet, dass** die Umlenkhebel (31) winkelförmig ausgebildet und schwenkbar in einem gehäuseseitig befestigten Träger (32) gelagert sind, wobei der eine Schenkel (33) jedes Umlenkhebels (31) an dem Führungsansatz (28) der Gegenplatte (26) anliegt und der andere Schenkel (34) auf dem zugeordneten Betätiger (36) aufliegt.

10. Multifunktionsschalter nach einem der Ansprüche 1 bis 9, **dadurch gekennzeichnet, dass** die Umlenkhebel (31) an ihren von den Schenkeln (33, 34) gebildeten Eckpunkten gegenüberliegende Lageransätze (37) aufweisen, die zugeordnete Lagerzapfen (38) des Trägers (32) übergreifen.

11. Multifunktionsschalter nach Anspruch 9 oder 10, **dadurch gekennzeichnet, dass** die dem Führungsansatz (28) der Gegenplatte (26) zugeordneten Schenkel (33) der Umlenkhebel (31) in Ausnehmungen (39) des Trägers (32) einliegen.

12. Multifunktionsschalter nach Anspruch 9 oder 10, **dadurch gekennzeichnet, dass** die den Betätigern (36) zugeordneten Schenkel (34) der Umlenkhebel (31) in Aussparungen (35) derselben einliegen.

13. Multifunktionsschalter nach einem der Ansprüche 1 bis 12, **dadurch gekennzeichnet, dass** die Betätiger (36) zwischen vorgespannten Domen (40) einer Schaltmatte (41) mit den Schaltkontakten (47) und den zugeordneten Schenkeln (34) der Umlenkhebel (31) gehalten sind.

14. Multifunktionsschalter nach einem der Ansprüche 1 bis 13, **dadurch gekennzeichnet, dass** der Sockel (45) eine Kontaktplatte (43) gegenüber der Schaltmatte (41) fixiert und die Dome (40) mit den aufliegenden Betätigern (36) unter Vorspannung gegen die entsprechenden Schenkel (34) der Umlenkhebel (31) presst, wobei die in den Domen (40) aufgenommenen Schaltkontakte (47) beim Verschwenken der Umlenkhebel (31) auf Anschlusskontakten (44) der Kontaktplatte (43) zur Auflage kommen.

## Claims

1. Multi-function switch, in particular push-button seat-adjusting switch, with an actuating element (4) which is mounted rotatably as well as slidably crosswise in a housing (1) and has associated switching contacts (17, 47) for acting on terminal contacts (44, 48), and in which is integrated the switching contact (17) associated with rotational movement, **characterised in that** associated with the actuating element (4) for each of its directions of sliding is a reversing lever (31) mounted on the housing side and cooperating with actuators (36) for acting on associated switching contacts (47), wherein the actuating element (4) cooperates via an axial guide attachment (28) with the reversing levers (31).

2. Multi-function switch according to claim 1, **characterised in that** the switching contact (17) integrated in the actuating element (4) is designed as a contact roller (16) which is mounted with spring-loading in the actuating element (4) on the side facing towards the housing (1) and acts on contact paths of a non-rotatable printed circuit board comprising the terminal contacts.

3. Multi-function switch according to claim 2, **characterised in that** the printed circuit board (14) has recesses (18) in which contact attachments (19) of the contact roller (16) for contacting the contact paths lie in one of the switching positions.

4. Multi-function switch according to claim 1 or 2, **characterised in that** the contact roller (16) extends through an intermediate ring (11) which carries at least one spring-loaded latch sleeve (12) which cooperates with a latch cam (13) of the actuating element (4) on the front side pointing in the direction of the housing (1).

5. Multi-function switch according to any of claims 2 to 4, **characterised in that** the printed circuit board (14) is held in the intermediate ring (11) by a carrier plate (20) which has clip arms (21) cooperating with the actuating element (4).

6. Multi-function switch according to claim 5, **characterised in that** the carrier plate (20) has attachments (23) extending through an associated housing wall (2) as well as a centring sleeve (24), which engage in corresponding recesses (25) of a non-rotatably mounted counter-plate (26).

7. Multi-function switch according to claim 6, **characterised in that** the counter-plate (26) includes the cylindrical guide attachment (28) which points in the direction of a base (45) and which engages slidably in an oblong hole (29) of a holding plate (27).

8. Multi-function switch according to claim 7, **characterised in that** the holding plate (27) overlaps the counter-plate (26) and is mounted on the housing side so as to be slidable in a direction oriented perpendicularly to the oblong hole (29).

9. Multi-function switch according to any of claims 1 to 8, **characterised in that** the reversing levers (31) are of angled design and mounted pivotably in a carrier (32) fixed on the housing side, wherein one arm (33) of each reversing lever (31) abuts against the guide attachment (28) of the counter-plate (26) and the other arm (34) rests on the associated actuator (36).

10. Multi-function switch according to any of claims 1 to 9, **characterised in that** the reversing levers (31) have, at their corner points formed by the arms (33, 34), opposed bearing attachments (37) which overlap associated journals (38) of the carrier (32).

11. Multi-function switch according to claim 9 or 10, **characterised in that** the arms (33) of the reversing levers (31) associated with the guide attachment (28) of the counter-plate (26) lie in recesses (39) of the carrier (32).

12. Multi-function switch according to claim 9 or 10, **characterised in that** the arms (34) of the reversing levers (31) associated with the actuators (36) lie in recesses (35) thereof.

13. Multi-function switch according to any of claims 1 to 12, **characterised in that** the actuators (36) are held between pretensioned domes (40) of a switching mat (41) with the switching contacts (47) and the associated arms (34) of the reversing levers (31).

14. Multi-function switch according to any of claims 1 to 13, **characterised in that** the base (45) fixes a contact plate (43) relative to the switching mat (41) and presses the domes (40) with the actuators (36) resting on them under initial tension against the corresponding arms (34) of the reversing levers (31), wherein the switching contacts (47) held in the domes (40) come to rest on terminal contacts (44) of the contact plate (43) during pivoting of the reversing levers (31).

## Revendications

1. Commutateur multifonction, en particulier commutateur à impulsions de réglage de siège, avec un élément d'actionnement (4) à contacts de commutation associés (17, 47), monté à déplacement en croix ainsi qu'à rotation dans un boîtier (1), pour la sollicitation de contacts de connexion (44, 48), dans lequel est intégré le contact de commutation (17) associé au mouvement de rotation, **caractérisé en ce qu'**à l'élément d'actionnement (4) est associé, pour chacune de ses directions de déplacement, un levier de renvoi (31) monté côté boîtier, coopérant avec des moyens d'actionnement (36), pour la sollicitation de contacts de commutation associés (47), l'élément d'actionnement (4) coopérant avec les leviers de renvoi (31) par l'intermédiaire d'un appendice de guidage axial (28).

2. Commutateur multifonction selon la revendication 1, **caractérisé en ce que** le contact de commutation (17) intégré à l'élément d'actionnement (4) est conformé en galet de contact (16) qui est monté sous sollicitation élastique dans l'élément d'actionnement (4) sur le côté tourné vers le boîtier (1) et qui sollicite des pistes de contact d'une plaque de circuit imprimé fixe en rotation (14) comportant les contacts de connexion.

3. Commutateur multifonction selon la revendication 2, **caractérisé en ce que** la plaque de circuit imprimé (14) comporte des renfoncements (18) dans lesquels s'engagent des appendices de contact (19) du galet de contact (16) pour la mise en contact des pistes de contact dans une des positions de commutation.

4. Commutateur multifonction selon la revendication 1 ou 2, **caractérisé en ce que** le galet de contact (16) traverse un anneau intermédiaire (11) qui porte au moins une douille de crantage sollicitée élastiquement (12), laquelle coopère avec une courbe de crantage frontale (13) de l'élément d'actionnement (4) tournée en direction du boîtier (1).

5. Commutateur multifonction selon une des revendications 2 à 4, **caractérisé en ce que** la plaque de circuit imprimé (14) est maintenue dans l'anneau intermédiaire (11) par une plaque porteuse (20) qui comporte des bras de clipsage (21) coopérant avec l'élément de fixation (4).

6. Commutateur multifonction selon la revendication 5, **caractérisé en ce que** la plaque porteuse (20) comporte des appendices (23) s'étendant à travers une cloison de boîtier associée (2) ainsi qu'un manchon de centrage (24), lesquels pénètrent dans des échancrures correspondantes (25) d'une contre-plaque (26) montée fixe en rotation.

7. Commutateur multifonction selon la revendication 6, **caractérisé en ce que** la contre-plaque (26) comprend l'appendice de guidage cylindrique (28) qui est tourné en direction du socle (45) et qui pénètre à coulissement dans un trou oblong (29) d'une plaque de maintien (27).

8. Commutateur multifonction selon la revendication 7, **caractérisé en ce que** la plaque de maintien (27) recouvre la contre-plaque (26) et est montée, côté boîtier, avec une possibilité de coulissement dans une direction perpendiculaire au trou oblong (29).

9. Commutateur multifonction selon une des revendications 1 à 8, **caractérisé en ce que** les leviers de renvoi (31) sont conformés en coudes et montés à pivotement dans un support (32) fixé côté boîtier, l'une des branches (33) de chaque levier de renvoi (31) étant appliquée contre l'appendice de guidage (28) de la contre-plaque (26) et l'autre branche (34) reposant sur le moyen d'actionnement associé (36).

10. Commutateur multifonction selon une des revendications 1 à 9, **caractérisé en ce que** les leviers de renvoi (31) comportent, au niveau de leurs angles formés par les branches (33, 34), des appendices de montage en vis-à-vis (37) qui recouvrent des tétons de support associés (38) du support (32).

11. Commutateur multifonction selon la revendication 9 ou 10, **caractérisé en ce que** les branches (33) des leviers de renvoi (31) associées à l'appendice de guidage (28) de la contre-plaque (26) s'engagent dans des échancrures (39) du support (32).

12. Commutateur multifonction selon la revendication 9 ou 10, **caractérisé en ce que** les branches (34) des leviers de renvoi (31) associées aux moyens d'actionnement (36) s'engagent dans des évidements (35) de ceux-ci.

13. Commutateur multifonction selon une des revendications 1 à 12, **caractérisé en ce que** les moyens d'actionnement (36) sont maintenus entre des plots précontraints (40) d'un tapis de commutation (41), avec les contacts de commutation (47), et les branches associées (34) des leviers de renvoi (31).

14. Commutateur multifonction selon une des revendications 1 à 13, **caractérisé en ce que** le socle (45) bloque une plaque de contact (43) par rapport au tapis de commutation (41) et presse les plots (40) avec les moyens d'actionnement (36) posés dessus, sous précontrainte, contre les branches correspondantes (34) des leviers de renvoi (31), les contacts de commutation (47) logés dans les plots (40) venant se positionner sur des contacts de connexion (44) de la plaque de contact (43) lors du pivotement des leviers de renvoi (31).
